# EUROPÄISCHE PATENTSCHRIFT

(11) **EP 3 439 902 B1**
(45) Veröffentlichungstag und Bekanntmachung des Hinweises auf die Patenterteilung: **03.06.2020**
(21) Anmeldenummer: 17709041.2
(22) Anmeldetag: 06.03.2017
(51) Int. Cl.: B60G 21/055, F16B 21/07, F16F 1/366, F16F 1/48, F16F 1/16

(54) **DREHSTABFEDER**
TORSION BAR SPRING
RESSORT À BARRE DE TORSION

(30) Priorität: 08.04.2016 DE 102016205916
(43) Veröffentlichungstag der Anmeldung: 13.02.2019
(73) Patentinhaber: ZF Friedrichshafen AG, 88046 Friedrichshafen (DE)
(72) Erfinder: SCHLOTTER, Sebastian, 97464 Niederwerrn (DE)
(74) Vertreter: ZF Friedrichshafen AG
(86) Internationale Anmeldenummer: PCT/EP2017/055112
(87) Internationale Veröffentlichungsnummer: WO 2017/174270

(56) Entgegenhaltungen:
- WO-A2-2006/024271
- CN-U- 201 694 023
- CN-U- 205 112 916
- DE-A1- 2 842 429
- DE-A1- 10 228 370
- DE-A1- 10 231 013
- DE-A1-102010 049 565
- DE-A1-102010 053 733
- DE-A1-102014 219 605
- DE-U1-202007 017 248

## Beschreibung

Die Erfindung betrifft eine Drehstabfeder für ein Fahrzeug gemäß dem Oberbegriff des Patentanspruchs 1.

Drehstabfedern sind in der Kraftfahrzeugtechnik, insbesondere dem Fahrwerksbau für den Einsatz als Wankstabilisatoren allgemein bekannt. Es handelt sich dabei um auf Torsion beanspruchbare Bauteile, welche die Wankbewegungen eines Fahrzeugs vermindern. Aus dem Stand der Technik gemäß DE 10 2010 049 565 A1 ist eine Drehstabfeder für ein Fahrzeug bekannt, die einen gebogenen, eine Torsionsfeder ausbildenden Grundkörper aus faserverstärktem Kunststoff aufweist. An dem Grundkörper lassen sich Anbauteile zur Anbindung des Grundkörpers an weitere Funktionsbauteile befestigen, was in DE 10 2010 049 565 A1 näher beschrieben wird. In diesem Zusammenhang werden als Verbindungstechniken das Ankleben und das Anspritzen genannt. Zudem wird erwähnt, dass die Anbauteile formschlüssig mit dem Grundkörper verbunden sein können, wobei unter anderem das Einbringen von Nieten vorgeschlagen wird, durch welche dann Schrauben oder Achsen geführt werden. Auch das Einbringen metallischer Einleger wird erwähnt.

Bei der aus DE 10 2010 049 565 A1 vorbekannten Drehstabfeder ist der Grundkörper rohrförmig ausgebildet und entspricht hinsichtlich der Außenform weitgehend dem einer weit verbreiteten Drehstabfeder aus rohrförmigem, hochfestem Federstahl. Aufgrund der Materialwahl, wonach der Grundkörper aus faserverstärktem Kunststoff besteht, weist die aus DE 10 2010 049 565 A1 vorbekannte Drehstabfeder gegenüber einer aus Stahl gefertigten Drehstabfeder ein deutlich geringeres Gewicht, eine hohe Flexibilität hinsichtlich der Federungseigenschaften und eine geringere Anfälligkeit gegen Korrosion auf.

Ganz allgemein erfolgt bei Wankstabilisatoren die Anbindung des üblicherweise im Wesentlichen U-förmig gebogenen Grundkörpers zur Übertragung von Betriebskräften zwischen Grundkörper und Pendelstützen jeweils endseitig. Bei einem aus faserverstärktem Kunststoff hergestellten Grundkörper kommen dementsprechend endseitig am Grundkörper angeordnete Anbauteile zum Einsatz.

Aus der CN 205 112 916 U ist eine Drehstabfeder bekannt, wobei endseitig an einem als Torsionsfeder ausgebildeten Grundkörper jeweils ein Anbauteil angeordnet ist. Hierbei ist die Verbindung zwischen dem Anbauteil und dem Grundkörper als eine Schnappverbindung ausgebildet.

Der DE 102 31 013 A1 ist eine Drehstabfeder entsprechend des Oberbegriffs des Anspruchs 1 zu entnehmen, bei der endseitig an einem Grundkörper jeweils ein Anbauteil zur Anbindung des Grundkörpers an eine Pendelstütze angeordnet ist, wobei eine Schnappverbindung zwischen Anbauteil und Grundkörper ausgebildet sein kann.

Es ist eine Aufgabe der vorliegenden Erfindung eine Drehstabfeder der eingangs beschriebenen Art anzugeben, bei welcher sich das wenigstens eine endseitig am Grundkörper angeordnete Anbauteil zur Anbindung des Grundkörpers an eine Pendelstütze auf zugleich sichere wie einfache Art mit dem Grundkörper verbinden lässt.

Die genannte Aufgabe wird gelöst durch eine Drehstabfeder gemäß den Merkmalen des Patentanspruchs 1. Die dem Patentanspruch 1 nachgeordneten Patentansprüche beziehen sich auf weitere vorteilhafte Ausgestaltungen einer solchen Drehstabfeder.

Erfindungsgemäß wird somit eine Drehstabfeder für ein Fahrzeug angegeben, die einen gebogenen, eine Torsionsfeder ausbildenden Grundkörper aus faserverstärktem Kunststoff sowie wenigstens ein endseitig daran angeordnetes Anbauteil zur Anbindung des Grundkörpers an eine Pendelstütze umfasst, wobei sich die Drehstabfeder durch eine Schnappverbindung zwischen Anbauteil und Grundkörper auszeichnet.

Demnach wurde zunächst erkannt, dass bei der aus DE 10 2010 049 565 A1 vorbekannten Drehstabfeder die Montage von Anbauteilen an den Grundkörper verhältnismäßig aufwändig ist, da Klebeprozesse oder Anspritzvorgänge durchgeführt werden müssen oder zusätzliche Bauteile (Niete, metallischer Einleger oder dergleichen) benötigt werden, wodurch die Handhabung erschwert wird und ein erhöhtes Fehlerrisiko besteht. Erfindungsgemäß wurde erkannt, dass sich zur einfachen und sicheren Herstellung einer Verbindung zwischen Anbauteil und Grundkörper vorteilhaft eine Schnappverbindung einsetzen lässt. Die beiden Funktionselemente - einerseits Anbauteil, andererseits Grundkörper - können mittels einer Schnappverbindung auf einfache Weise formschlüssig gefügt werden. Abhängig von der Gestaltung der Schnappverbindung kommt dabei wahlweise eine lösbare oder unlösbare Verbindung zustande. Im Fall einer lösbaren Verbindung ist damit sogar eine einfache Demontage der Drehstabfeder möglich. Die Schnappverbindung kann grundsätzlich auf verschiedene Weise ausgeführt werden, wobei in jedem Falle an zumindest einem der beiden Funktionselemente (Anbauteil oder Grundkörper) ein elastisch verformbares Element vorgesehen ist, das sich nach dem Fügevorgang der beiden Funktionselemente an dem anderen Funktionselement lösbar oder unlösbar verhakt. Im verhakten Zustand liegt zwischen Anbauteil und Grundkörper ein Formschluss vor. Als besondere Vorteile einer Schnappverbindung sind die einfache und sichere Montage aufgrund weniger zu fügender Bauteile und die damit einhergehende Kostenersparnis anzusehen. Zudem besteht die Möglichkeit einer einfachen Demontage der Drehstabfeder, wenn eine lösbare Schnappverbindung zum Einsatz kommt. Bei entsprechender Gestaltung der Schnappverbindung kann die Montage (und ggf. auch die Demontage) sogar werkzeuglos erfolgen.

Zweckmäßigerweise weist der Grundkörper der Drehstabfeder zwei sich gegenüberliegende Endbereiche auf, an denen jeweils ein Anbauteil zur Anbindung des Grundkörpers an eine Pendelstütze angeordnet ist. Dabei kann der Grundkörper auf verschiedene Weise geformt sein, wobei üblicherweise - insbesondere zur Verwendung der Drehstabfeder als Wankstabilisator - eine im Wesentlichen U-förmige Formgebung des Grundkörpers bevorzugt wird. Die Anbauteile sind in diesem Fall jeweils endseitig an jedem der beiden U-Schenkel angeordnet.

Erfindungsgemäß ist bei der Drehstabfeder vorgesehen, dass das Anbauteil einen Anschlussbereich für eine Pendelstütze und einen davon abragenden Anschlussbereich für den Grundkörper aufweist. Demnach fungiert das Anbauteil als Schnittstelle zwischen Grundkörper und Pendelstütze, dient also zur Kraftübertragung zwischen diesen. Entsprechend weist der am Anbauteil vorgesehene Anschlussbereich für die Pendelstütze eine geeignete Anbindungsmöglichkeit auf, so dass sich die Pendelstütze mit dem Anbauteil verbinden lässt. Der Anschlussbereich für die Pendelstütze kann hierzu beispielsweise ein flächig abragendes Element aufweisen, in dem ein Durchgang zur gelenkigen Verbindung mit dem (Gabel-) Kopf einer Pendelstütze ausgebildet ist. Das Anbauteil, aufweisend den Anschlussbereich für die Pendelstütze sowie den Anschlussbereich für den Grundkörper, ist vorzugsweise einteilig ausgeführt und kann aus Kunststoff oder Metall hergestellt sein. Besonders bevorzugt ist eine Ausführung aus Kunststoff, da sich bei hinreichender Festigkeit auch eine komplexe Formgebung, wie diese zur Bereitstellung einer Schnappverbindung erforderlich ist, auf einfache Weise erzielen lässt.

Zur Herstellung einer Schnappverbindung zwischen Anbauteil und Grundkörper weist der Anschlussbereich für den Grundkörper eine Aufnahme mit zwei Sicherungselementen auf. Die Aufnahme kann unterschiedlich gestaltet sein, wobei gemäß einer vorteilhaften Weiterbildung die Aufnahme eine solche Formgebung aufweist, dass sich der Grundkörper und das Anbauteil in einer durch die Form der Aufnahme vorgegebenen Axialrichtung fügen lassen. Dies lässt sich vorteilhaft dadurch erzielen, dass die Aufnahme einen Hohlraum ausbildet, in welchen sich ein Endbereich des Grundkörpers - entlang der durch die Form des Hohlraums vorgegebenen Fügerichtung - einführen lässt. Der jeweilige Endbereich des Grundkörpers ragt somit zumindest teilweise in das Anbauteil hinein, ist somit teilweise in dieses eingesteckt. Anders ausgedrückt, das Anbauteil ist im montierten Zustand auf den jeweiligen Endbereich des Grundkörpers mittels der Aufnahme aufgesteckt.

Zur Verhinderung des Lösens des aufeinander gesteckten Zustandes von Anbauteil und Grundkörper weist der Anschlussbereich für den Grundkörper weiterhin zwei Sicherungselemente auf, die auf unterschiedliche Weise gestaltet sein können.

Erfindungsgemäß ist vorgesehen, dass ein Sicherungselement in Form einer dem Anschlussbereich zugeordneten Schnappzunge ausgebildet ist, die zur Herstellung der Schnappverbindung in eine am Grundkörper ausgebildete Ausnehmung eingreift, um ein Lösen des Anbauteils vom Grundkörper zu verhindern. Zweckmäßigerweise ist die Schnappzunge elastisch verformbar, so dass sich diese während des Fügevorgangs verformt, um bei Erreichen des Endzustands des Fügevorgangs durch Rückverformung ("Einschnappen") eine formschlüssige Verbindung zwischen Anbauteil und Grundkörper herzustellen. Bevorzugt erfolgt dies, indem sich die Schnappzunge an einer am Grundkörper ausgebildeten Ausnehmung verhakt. Abhängig von der Gestaltung und insbesondere der Zugänglichkeit der Schnappzunge von außen kann es möglich sein, die hergestellte Schnappverbindung (den Formschluss) wieder aufzuheben, wodurch eine lösbare Verbindung geschaffen wäre.

An dem Anschlussbereich des Anbauteils sind zwei Sicherungselemente in Form von Schnappzungen ausgebildet, diese können beispielsweise an umfänglich gegenüberliegenden Seiten des Anbauteils angeordnet sein.

Indem der Anschlussbereich für den Grundkörper einerseits eine Aufnahme, andererseits wenigstens ein Sicherungselement aufweist, wird auf weiterhin vorteilhafte Weise eine Funktionstrennung geschaffen. Demnach dient die Aufnahme hauptsächlich zur Kraftübertragung zwischen Grundkörper und Anbauteil. Hingegen kommt dem Sicherungselement im Wesentlichen die Funktion zu, ein Lösen des Anbauteils vom Grundkörper entgegen der Fügerichtung zu verhindern. Vorteilhaft ist die Fügerichtung jedoch in etwa senkrecht zur Hauptkrafteinleitungsrichtung durch die am Anbauteil anlenkbaren Pendelstütze, so dass die durch das Sicherungselement aufzubringenden Haltekräfte verhältnismäßig gering sind und somit die Sicherheit der Schnappverbindung möglichst wenig beeinträchtigt wird.

Zur Gewährleistung einer dem Einsatzzweck entsprechenden Orientierung des Anbauteils gegenüber dem Grundkörper ist vorteilhaft dem dem Anbauteil zugewandten Endbereich des Grundkörpers eine mit der Aufnahme zusammenwirkende Verdrehsicherung zugeordnet. Auf diese Weise lässt sich gewährleisten, dass auch bei einer im Wesentlichen kreisrunden Querschnittsform des Grundkörpers ein Verdrehen des darauf endseitig aufgesteckten Anbauteils verhindert wird. Die Verdrehsicherung lässt sich auf verschiedene Weise gestalten. Vorteilhaft könnte am Endbereich des Grundkörpers zumindest abschnittsweise eine Querschnittsform vorliegen, die von einem kreisrunden Querschnitt abweicht, beispielsweise durch eine an einem Umfangsbereich vorgesehene Abflachung. Durch eine damit formkorrespondierende Gestaltung der Aufnahme wird im aufgesteckten Zustand ein Verdrehen des Anbauteils gegenüber dem Endbereich des Grundkörpers wirksam verhindert.

Zur Erhöhung der übertragbaren Kräfte zwischen Anbauteil und Grundkörper sieht die erfindungsgemäße Drehstabfeder vor, dass die am Anschlussbereich für den Grundkörper vorgesehene Aufnahme einen den Endbereich des Grundkörpers bereichsweise umschließenden Ringabschnitt aufweist, der über einen Stegbereich mit dem Anschlussbereich für die Pendelstütze verbunden ist. Der umschließende Ringabschnitt ist somit über den Stegbereich deutlich beabstandet vom Anschlussbereich für die Pendelstütze, so dass zwischen Grundkörper und Anbauteil auftretende Querkräfte günstig über die Aufnahme in das Anbauteil übertragen werden können.

Dazu umfasst der Stegbereich zwei sich axial erstreckende über den Umfang des Anbauteils vorzugsweise gleichmäßig verteilt angeordnete Stege. Dabei sind die Stege vorteilhaft so angeordnet, dass die hauptsächlich auf das Anbauteil einwirkenden Kräfte in hohem Maße über diese übertragen werden können.

Eine in konstruktiver Hinsicht günstige erfindungsgemäße Gestaltung ergibt sich, indem bezogen auf eine Umfangsrichtung zwischen zwei Stegen jeweils eine Schnappzunge angeordnet ist. Bei Vorhandensein von zwei Stegen und zwei Schnappzungen liegen sich zwei Stege und zwei Schnappzungen demnach jeweils diametral gegenüber.

Die Erfindung wird nachfolgend anhand eines Ausführungsbeispiels näher erläutert, woraus sich auch weitere vorteilhafte Effekte der Erfindung ergeben. In der Zeichnung zeigt:
- Fig. 1: eine Drehstabfeder für ein Fahrzeug gemäß einem Ausführungsbeispiel der Erfindung in perspektivischer Ansicht,
- Fig. 2: einen Endbereich des Grundkörpers der in Fig. 1 dargestellten Drehstabfeder sowie ein darauf steckbares Anbauteil in perspektivischer Ansicht,
- Fig. 3: einen Teil der in Fig. 1 dargestellten Drehstabfeder in Schnittdarstellung,
- Fig. 4a: einen Endbereich der in Fig. 1 dargestellten Drehstabfeder mit Anbauteil im aufgesteckten Zustand,
- Fig.4b: einen Endbereich der in Fig. 1 dargestellten Drehstabfeder im Zustand vor der Montage des Anbauteils.

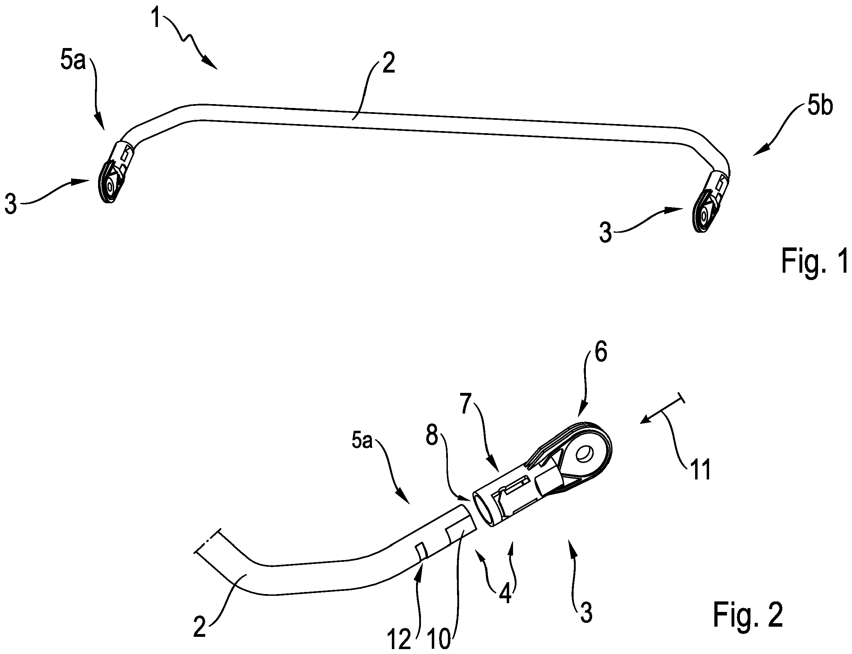

Fig. 1 zeigt eine Drehstabfeder 1 für ein Fahrzeug gemäß einem Ausführungsbeispiel der vorliegenden Erfindung. Es handelt sich dabei um eine auf Torsion beanspruchbare Feder, die zur Verminderung von Wankbewegungen eines Fahrzeugs am Fahrwerk des Fahrzeugs einsetzbar ist. Als wesentliche Komponenten umfasst die Drehstabfeder 1 einen etwa U-förmig gebogenen, eine Torsionsfeder ausbildenden Grundkörper 2 sowie zwei endseitig daran angeordnete Anbauteile 3, die zur Anbindung des Grundkörpers 2 an jeweils eine (nicht dargestellte) Pendelstütze dienen. Der Grundkörper 2 ist aus einem faserverstärkten Kunststoff hergestellt. Als Fasermaterial kommen beispielsweise endlose Glas- oder Kohlefasern zum Einsatz, die in eine duroplastische oder thermoplastische Matrix eingebettet sind. Der Grundkörper 2 kann dabei hohl (rohrförmig) ausgeführt oder aus Vollmaterial gefertigt sein. Entsprechend der Hauptbelastung bzw. der erforderlichen Steifigkeit ist ein geeigneter Lagenaufbau denkbar. Bei Ausführung des Grundkörpers 2 als Vollkörper ist ein unidirektionaler Kern mit beliebigen Faserorientierungen in den Außenlagen denkbar, bei einem hohlen Grundkörper 2 auch ohne unidirektionalen Kern.

Zur Erfüllung seiner Funktion - Verringerung von Wankbewegungen des Fahrzeugs - bildet der Grundkörper 2 eine Torsionsfeder aus, wobei die Einleitung eines Torsionsmomentes durch die gebogene, insbesondere U-förmige Gestaltung des Grundkörpers 2 an Endbereichen 5a, 5b der einander gegenüberliegenden U-Schenkel erfolgt. An jedem der Endbereiche 5a, 5b des Grundkörpers 2 ist zu diesem Zweck ein Anbauteil 3 angeordnet, welches dazu dient, den Grundkörper 2 an eine (nicht dargestellte) Pendelstütze anzubinden. Das Anbauteil 3 dient somit jeweils als Schnittstelle zur Kraftübertragung zwischen Grundkörper 2 und Pendelstütze.

Die in Fig. 1 gezeigte Drehstabfeder 1 zeichnet sich aus durch eine nachfolgend zunächst anhand von Fig. 2 beschriebene Schnappverbindung 4 zwischen Anbauteil 3 und Grundkörper 2.
Zur Schaffung einer den betrieblichen Beanspruchungen gerecht werdenden Anbindung, die zudem einfach und sicher zu montieren ist, handelt es sich bei dem Anbauteil 3 um ein einteilig aus Kunststoff hergestelltes Bauteil. Dieses weist einen Anschlussbereich 6 für die Pendelstütze und einen davon abragenden Anschlussbereich 7 für den Grundkörper 2 auf. Das Anbauteil 3 gliedert sich also im Wesentlichen in zwei Anschlussbereiche, die sich gemäß Darstellung von Fig. 2 in einer Axialrichtung 11 erstrecken. Der Anschlussbereich 6 für die Pendelstütze wird im Wesentlichen durch ein flächiges Element gebildet, das zu einem Auge mit einem Durchgang 15 geformt ist. An den Durchgang 15 lässt sich eine Pendelstütze gelenkig anbinden.

Der Anschlussbereich 7 für den Grundkörper 2 weist eine im Wesentlichen zylindrische äußere Formgebung auf. Eine im Wesentlichen zylindrische Ausnehmung im Anbauteil 3 bildet eine Aufnahme 8. In die Aufnahme 8 lässt sich der dem Anbauteil 3 zugewandte Endbereich 5a des Grundkörpers 2 zumindest teilweise einführen, um von dieser aufgenommen zu werden.

Der Endbereich 5a des Grundkörpers 2 weist im Wesentlichen eine zylindrische Außenform auf. Davon abweichend ist am äußersten Ende des Endbereichs 5a eine Verdrehsicherung 10 in Form einer Abflachung vorgesehen. Eine gleichartige Abflachung ist auf der diametral gegenüberliegenden Seite des Endbereichs 5a ausgebildet (in Fig. 2 verdeckt).

Am Endbereich 5a des Grundkörpers 2 ist weiterhin eine über einen Teil des Umfangs verlaufende Nut 12 ausgebildet, die axial beabstandet ist von der Verdrehsicherung 10. Eine gleichartige Nut 12 ist auf der diametral gegenüberliegenden Seite des Endbereichs 5a des Grundkörpers 2 ausgebildet (in Fig. 2 ebenfalls verdeckt).

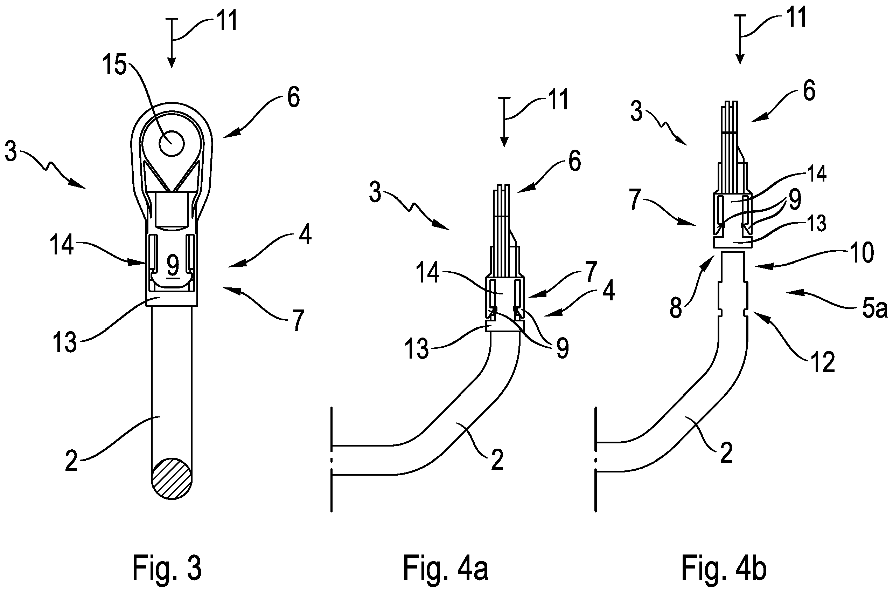

Durch einen Pfeil ist in Fig. 2, wie auch in den übrigen Figuren 3, 4a, 4b, eine Axialrichtung 11 angegeben, welche die Fügerichtung zur Montage des Anbauteils 3 an dem Grundkörper 2 angibt und die bei der weiteren Erläuterung der Funktionsweise als Bezugsrichtung dienlich ist.
In den Figuren 3, 4a, 4b wird die Funktionsweise der bereits in Fig. 2 dargestellten Schnappverbindung 4 in weiteren Aspekten dargestellt. Da es sich um Aspekte der gleichen Drehstabfeder 1 (vgl. Fig. 1) handelt, beziehen sich gleiche Bezugszeichen auf gleiche Bauteile bzw. Sachverhalte, weshalb zur Vermeidung von Wiederholungen auf bereits gemachte Erläuterungen verwiesen wird.

Fig. 3 zeigt die Drehstabfeder 1 in einer Schnittdarstellung. Der Darstellung lässt sich entnehmen, dass der Anschlussbereich 7 des Anbauteils 3 ein Sicherungselement 9 in Form einer Schnappzunge aufweist. Die Schnappzunge ragt in Axialrichtung 11 in Richtung des Grundkörpers 2 vom Anschlussbereich 6 ab. Die Schnappzunge 9 weist, wie besser den Figuren 4a und 4b zu entnehmen, an deren axialem Ende einen hakenförmigen Vorsprung auf und ist in gewissem Maße elastisch verformbar. Die Schnappzunge 9 dient zur Herstellung einer Schnappverbindung 4, indem die Schnappzunge 9, wie nachfolgend noch näher zu beschreiben, mit dem Grundkörper 2 einen Formschluss eingeht. Wie weiterhin Fig. 3 zu entnehmen, weist die Aufnahme 8 einen den Endbereich 5a des Grundkörpers 2 bereichsweise umschließenden Ringabschnitt 13 auf. Der Ringabschnitt 13 ist axial beabstandet von der Schnappzunge 9 und bildet damit einen dem Grundkörper 2 zugewandten Randbereich des Anbauteils 3. Der Ringabschnitt 13 ist über einen Stegbereich 14 mit dem Anschlussbereich 6 für die Pendelstütze verbunden.

Wie Fig. 3 zu entnehmen, umfasst der Stegbereich 14 im gezeigten Ausführungsbeispiel zwei sich axial erstreckende Stege, die jeweils eine Verbindung zwischen dem Ringabschnitt 13 und dem Anschlussbereich 6 des Anbauteils 3 herstellen. Die beiden Stege sind an sich diametral gegenüberliegenden Bereichen des Anbauteils 3 angeordnet. Wenn auf den Anschlussbereich 6 des Anbauteils 3 eine senkrecht zur Axialrichtung 11 durch die Pendelstütze eingeleitete Kraft wirkt, so kann diese Kraft als Zugkraft bzw. Druckkraft über die Stege auf den Ringabschnitt 13 übertragen werden. Die auftretenden Betriebskräfte beeinträchtigen die Haltbarkeit der über die Schnappzunge 9 hergestellten Schnappverbindung 4 jedoch praktisch nicht.

In den Figuren 4a und 4b sind verschiedene Fügezustände gezeigt, wobei Fig. 4a den Zustand bei hergestellter Schnappverbindung 4 zeigt, während 4b einen Ausgangszustand vor dem Fügeprozess zeigt. Aus der gegenüber Fig. 3 um 90 Grad gedrehten Darstellung der Figuren 4a und 4b ist zu sehen, dass am Anbauteil 3 zwei Schnappzungen 9 ausgebildet sind, wobei sich in Zusammenschau mit Fig. 3 entnehmen lässt, dass an dem Anbauteil 3, bezogen auf eine Umfangsrichtung, jeweils zwischen zwei Stegen eine Schnappzunge 9 angeordnet ist.

Der stattfindende Fügeprozess zur Herstellung einer Schnappverbindung sei nachfolgend kurz beschrieben:
Gemäß Darstellung von Fig. 4b wird das Anbauteil gegenüber dem Grundkörper 2 zunächst (vor dem Fügeprozess) so positioniert und ausgerichtet, dass dessen Anschlussbereich 7 einem der Endbereiche - hier dem Endbereich 5a - zugewandt ist und mit diesem auf einer gedachten gemeinsamen Fügeachse (Axialrichtung 11) liegt. Zur Herstellung der Verbindung wird nun das Anbauteil 3 in Axialrichtung 11 auf den Endbereich 5a aufgeschoben. Der Endbereich 5a dringt dabei in die Aufnahme 8 am Anbauteil 3 ein, wobei die am Endbereich 5a ausgebildete Verdrehsicherung 10 in der Aufnahme 8 geführt wird, so dass sich mit Beginn dieser Führung innerhalb der Aufnahme 8 eine Verdrehsicherung ergibt, die ein Verdrehen des Anbauteils 3 gegenüber dem Grundkörper 2 um die Längsachse (Axialrichtung 11) verhindert.

Bei Erreichen einer - wie in Fig. 4a dargestellten Endposition - rasten die sich gegenüberliegenden Schnappzungen 9 in die am Endbereich 5a ausgebildeten Nuten 12 ein, nachdem sie während des Fügevorgangs durch Kontakt der endseitigen Abschrägungen mit dem Endbereich 5a elastisch nach außen verformt wurden. Im eingerasteten Zustand wirken die Schnappzungen 9 wie Widerhaken und verhindern durch Eingreifen in die Nuten 12 ein Lösen des Anbauteils 3 vom Grundkörper 2 entgegen der Axialrichtung 11.

Die auf diese Weise zwischen Anbauteil 3 und Grundkörper 2 hergestellte formschlüssige Verbindung eignet sich zur Übertragung der betriebsbedingt auftretenden Kräfte und ist zudem einfach und sicher zu montieren. Eine einfache Demontage ist ebenfalls möglich, hierzu wäre es lediglich erforderlich, die Schnappzungen 9 wieder aus dem Eingriffsbereich der Nuten 12 zu bringen.

### Bezugszeichen

- 1: Drehstabfeder
- 2: Grundkörper
- 3: Anbauteil
- 4: Schnappverbindung
- 5a: Endbereich
- 5b: Endbereich
- 6: Anschlussbereich für Pendelstütze
- 7: Anschlussbereich für Grundkörper
- 8: Aufnahme
- 9: Schnappzunge
- 10: Verdrehsicherung
- 11: Axialrichtung
- 12: Nut
- 13: Ringabschnitt
- 14: Stegbereich
- 15: Durchgang

## Patentansprüche

1. Drehstabfeder (1) für ein Fahrzeug, umfassend einen gebogenen, eine Torsionsfeder ausbildenden Grundkörper (2) aus faserverstärktem Kunststoff sowie wenigstens ein endseitig daran angeordnetes Anbauteil (3) zur Anbindung des Grundkörpers (2) an eine Pendelstütze, und mit einer Schnappverbindung (4) zwischen Anbauteil (3) und Grundkörper (2), wobei das Anbauteil (3) einen Anschlussbereich (6) für eine Pendelstütze und einen davon abragenden Anschlussbereich (7) für den Grundkörper (2) aufweist, **dadurch gekennzeichnet, dass** der Anschlussbereich (7) für den Grundkörper (2) eine Aufnahme (8) mit zwei Sicherungselementen (9) aufweist, wobei das Sicherungselement (9) jeweils in Form einer dem Anschlussbereich (7) zugeordneten Schnappzunge (9) ausgebildet ist, die zur Herstellung der Schnappverbindung (4) in eine am Grundkörper (2) ausgebildete Ausnehmung (12) eingreift, um ein Lösen des Anbauteils (3) vom Grundkörper (2) zu verhindern, und die Aufnahme (8) einen den Endbereich (5a, 5b) des Grundkörpers (2) bereichsweise umschließenden Ringabschnitt (13) aufweist, der über einen Stegbereich (14) mit dem Anschlussbereich (6) für die Pendelstütze verbunden ist, wobei der Stegbereich (14) zwei sich axial erstreckende über den Umfang des Anbauteils (3) verteilt angeordnete Stege umfasst und bezogen auf eine Umfangsrichtung zwischen den zwei Stegen jeweils eine Schnappzunge (9) angeordnet ist.

2. Drehstabfeder nach Anspruch 1, **dadurch gekennzeichnet, dass** der Grundkörper (2) zwei sich gegenüberliegende Endbereiche (5a, 5b) aufweist, an denen jeweils ein Anbauteil (3) zur Anbindung des Grundkörpers (2) an eine Pendelstütze angeordnet ist.

3. Drehstabfeder nach einem der vorhergehenden Ansprüche, **dadurch gekennzeichnet, dass** die Aufnahme (8) durch eine am Anbauteil (3) ausgebildete Ausnehmung gebildet wird, die zur zumindest teilweisen Aufnahme des dem Anbauteil (3) zugewandten Endbereichs (5a, 5b) des Grundkörpers (2) ausgebildet ist.

4. Drehstabfeder nach einem der vorigen Ansprüche, **dadurch gekennzeichnet, dass** sich der Grundkörper (2) und das Anbauteil (3) in einer durch die Form der Aufnahme (8) vorgegebenen Axialrichtung (11) fügen lassen.

5. Drehstabfeder nach einem der vorhergehenden Ansprüche, **dadurch gekennzeichnet, dass** dem dem Anbauteil (3) zugewandten Endbereich (5a, 5b) des Grundkörpers (2) eine mit der Aufnahme (8) zusammenwirkende Verdrehsicherung (10) zugeordnet ist.

## Claims

1. Torsion bar spring (1) for a vehicle, comprising a bent main body (2) which forms a torsion spring and is composed of fibre-reinforced plastic, and at least one add-on part (3) which is arranged on the end side of said main body for connecting the main body (2) to a hinged support, and with a snap connection (4) between the add-on part (3) and the main body (2), wherein the add-on part (3) has a connection region (6) for a hinged support and a connection region (7) protruding from said connection region (6) for the main body (2), **characterized in that** the connection region (7) for the main body (2) has a receptacle (8) with two securing elements (9), wherein the securing element (9) is in each case designed in the form of a snap-action tongue (9) which is assigned to the connection region (7) and, in order to produce the snap connection (4), engages in a recess (12), which is formed on the main body (2), in order to prevent the add-on part (3) from being detached from the main body (2), and the receptacle (8) has an annular portion (13) which surrounds the end region (5a, 5b) of the main body (2) in regions and is connected to the connection region (6) for the hinged support via a web region (14), wherein the web region (14) comprises two axially extending webs which are distributed over the circumference of the add-on part (3), and a snap-action tongue (9) is in each case arranged between the webs with respect to a circumferential direction.

2. Torsion bar spring according to Claim 1, **characterized in that** the main body (2) has two opposite end regions (5a, 5b), on each of which an add-on part (3) is arranged for connecting the main body (2) to a hinged support.

3. Torsion bar spring according to either of the preceding claims, **characterized in that** the receptacle (8) is formed by a recess which is formed on the add-on part (3) and is designed for at least partially receiving that end region (5a, 5b) of the main body (2) which faces the add-on part (3).

4. Torsion bar spring according to one of the preceding claims, **characterized in that** the main body (2) and the add-on part (3) can be joined in an axial direction (11) predetermined by the shape of the receptacle (8).

5. Torsion bar spring according to one of the preceding claims, **characterized in that** that end region (5a, 5b) of the main body (2) which faces the add-on part (3) is assigned an anti-twist lock (10) interacting with the receptacle (8).

## Revendications

1. Ressort à barre de torsion (1) pour un véhicule, comprenant un corps de base (2) cintré, constituant un ressort de torsion, constitué de matière plastique renforcée par des fibres ainsi qu'au moins un composant rapporté (3) disposé sur celui-ci du côté de l'extrémité, pour le raccordement du corps de base (2) à un support pendulaire, et comprenant une connexion par encliquetage (4) entre le composant rapporté (3) et le corps de base (2), le composant rapporté (3) présentant une région de raccordement (6) pour le support pendulaire et une région de raccordement (7) faisant saillie depuis celle-ci pour le corps de base (2), **caractérisé en ce que** la région de raccordement (7) pour le corps de base (2) présente un logement (8) avec deux éléments de fixation (9), l'élément de fixation (9) étant à chaque fois réalisé sous la forme d'une langue d'encliquetage (9) associée à la région de raccordement (7), laquelle s'engage, pour établir la connexion par encliquetage (4), dans un évidement (12) réalisé sur le corps de base (2), afin d'empêcher que le composant rapporté (3) ne se détache du corps de base (2), et le logement (8) présentant une portion annulaire (13) entourant par sections la région d'extrémité (5a, 5b) du corps de base (2), laquelle est connectée par le biais d'une région de nervures (14) à la région de raccordement (6) pour le support pendulaire, la région de nervures (14) comprenant deux nervures s'étendant axialement, disposées de manière répartie sur la périphérie du composant rapporté (3) et une langue d'encliquetage (9) étant à chaque fois disposée, par rapport à une direction périphérique, entre les deux nervures.

2. Ressort à barre de torsion selon la revendication 1, **caractérisé en ce que** le corps de base (2) présente deux régions d'extrémité opposées (5a, 5b) au niveau desquelles est à chaque fois disposé un composant rapporté (3) pour le raccordement du corps de base (2) à un support pendulaire.

3. Ressort à barre de torsion selon l'une quelconque des revendications précédentes, **caractérisé en ce que** le logement (8) est formé par un évidement réalisé au niveau du composant rapporté (3), lequel est réalisé pour recevoir au moins en partie la région d'extrémité (5a, 5b) du corps de base (2) tournée vers le composant rapporté (3).

4. Ressort à barre de torsion selon l'une quelconque des revendications précédentes, **caractérisé en ce que** le corps de base (2) et le composant rapporté (3) peuvent être assemblés dans une direction axiale (11) prédéfinie par la forme du logement (8) .

5. Ressort à barre de torsion selon l'une quelconque des revendications précédentes, **caractérisé en ce qu'**une fixation antirotation (10) coopérant avec le logement (8) est associée à la région d'extrémité (5a, 5b) du corps de base (2) tournée vers le composant rapporté (3).
